# EUROPÄISCHE PATENTSCHRIFT

(11) **EP 1 567 848 B1**
(45) Veröffentlichungstag und Bekanntmachung des Hinweises auf die Patenterteilung: **17.03.2010**
(21) Anmeldenummer: 03788859.1
(22) Anmeldetag: 05.12.2003
(51) Int. Cl.: G01N 3/32, G01M 7/02

(54) **VERFAHREN ZUR BESTIMMUNG DER DYNAMISCHEN KENNDATEN VON MATERIALEN**
METHOD FOR DETERMINING DYNAMIC CHARACTERISTICS OF MATERIALS
PROCEDE PERMETTANT DE DETERMINER LES DONNEES CARACTERISTIQUES DYNAMIQUES DE MATERIAUX

(30) Priorität: 06.12.2002 DE 10257056
(43) Veröffentlichungstag der Anmeldung: 31.08.2005
(73) Patentinhaber: AKsys GmbH, 67547 Worms (DE)
(72) Erfinder: POTTHOFF, Hans-Hermann, 76476 Bischweier (DE)
(74) Vertreter: Hebing, Norbert
(86) Internationale Anmeldenummer: PCT/DE2003/004019
(87) Internationale Veröffentlichungsnummer: WO 2004/053447

(56) Entgegenhaltungen:
- DE-A- 3 918 835
- DE-C- 4 240 600
- US-A- 4 342 229
- US-A- 5 520 052
- L. E. GOODMAN: "Shock and vibration handbook" 1996 , MCGRAW-HILL , NEW YORK XP002287607 Seite 36.3 -Seite 36.5

## Beschreibung

Die Erfindung bezieht sich auf ein Verfahren zur Bestimmung der dynamischen Kenndaten von Materialien , insbesondere des Verlustfaktors von Belägen zur Körperschall-Entdröhnung in der KFZ-Industrie, mit den folgenden Schritten:
1. Erzeugen einer streifenförmigen, das Material aufweisenden Probe.
2. Einspannen der Probe an einem Ende und Erregen der Probe zu einer transversalen Biegewelle mittels eines Schwingerregers.
3. Bestimmung einer Kenngröße der Auslenkung oder der Auslenkungsgeschwindigkeit an wenigstens einer Stelle der Probe.

Ein ähnliches Verfahren ist vom Dokument DE 39 18 835 bereits bekannt. Ein ähnliches Verfahren, das diese Merkmale aufweist, ist als Verfahren nach "Oberst" bekannt, das unter anderem in der europäischen Norm EN ISO 6721-3, Ausgabe 1996: Kunststoffe, Bestimmung dynamischer/mechanischer Eigenschaften, Teil 3: Biegeschwingung, Resonanzkurven-Verfahren, genannt ist. Danach besteht das Messverfahren darin, einem Probenkörper Biegeschwingungen im Frequenzbereich zwischen 10 und 1.000 Hz aufzuzwingen und aus dem Resonanzverhalten des Probenkörpers entsprechende Kenngrößen, z. B. den Verlustfaktor d, die die Dämpfungseigenschaften beschreiben, abzuleiten. Die stab- oder streifenförmigen Probenkörper von rechteckigem Querschnitt werden dazu in vertikaler Lage an ihrem oberen Ende frei hängend eingespannt. Das untere freie Ende der Probe wird mittels eines Schwingerregers, der auf induktive Weise auf die Probe einwirkt, in Schwingung versetzt.

Die dabei entstehende Biegewelle läuft zum oberen Ende der Probe, wird dort an der festen Einspannung reflektiert, so dass sich insgesamt eine stehende Welle ausbildet. Nahe der oberen festen Einspannung befindet sich ein Empfänger, der an dieser Messstelle eine Kenngröße der Vibration, z. B. die Auslenkung oder die Auslenkungsgeschwindigkeit, misst. Die Auslenkungsgeschwindigkeit ist die Geschwindigkeit, mit der die Probenoberfläche an der Messstelle in Normalenrichtung schwingt, mit der sie also die 0-Lage durchläuft.

Mit diesem Verfahren können jedoch nur Messungen bis zu Verlustfaktoren d = 0,3 einigermaßen präzise ausgeführt werden. Außerdem reicht der nutzbare Frequenzbereich in der Praxis nur bis zu wenigen 100 Hz. Selbst die in der DIN-Norm angegebene Grenze von 1.000 Hz reicht nicht aus, da mehr und mehr Material-Kenndaten für sehr hohe Frequenzen, z. B. im Bereich der Bremsenakustik bis zu 10 kHz von Interesse sind.

Eine andere Methode zur Bestimmung des Verlustfaktors d ist das sogenannte PIM-Verfahren. Hier wird eine bestimmte Energiemenge in das zu vermessende, mit Entdröhnmaterial belegte Blech eingebracht, wodurch dieses zu Schwingungen angeregt wird. An einer ausreichend großen Anzahl von Messpunkten wird die Vibration des plattenförmigen Bleches gemessen. Daraus lässt sich die Vibrationsenergie ermitteln. Die Differenz zwischen der eingespeisten Energie und der Vibrationsenergie entspricht der von dem Entdröhnmaterial absorbierten Energiemenge. Dieses Verfahren ist relativ aufwändig, da eine Vielzahl von Messungen durchgeführt werden muss. Außerdem endet auch hier in der Praxis der nutzbare Frequenzbereich bei 800 Hz.

Das grundsätzliche Problem bei den genannten Messverfahren besteht darin, dass mit stehenden Biegewellen gearbeitet wird. Diese entstehen, weil eine einlaufende Biegewelle an der Einspannung der Probe reflektiert wird. Damit fließt aber auch die Eigenschaft der Einspannstelle in die Messung mit ein, da ein Teil der eingeleiteten Energie von dieser geschluckt wird.

Die Erfindung beruht somit auf dem Problem, ein Messverfahren zu schaffen, bei dem Dämpfungseigenschaften, d. h. insbesondere der Verlustfaktor d, in einem weiten Temperaturbereich und in einem sehr weiten Frequenzbereich, möglichst bis zu 10 kHz, labormäßig schnell und präzise gemessen werden können.

Zur Lösung des Problems wird das im Oberbegriff des Anspruchs 1 skizzierte Messverfahren dahingehend modifiziert, dass die Erregung der Probe am eingespannten Ende erfolgt, so dass sich eine zum anderen Ende der Probe laufende Biegewelle mit abnehmender Amplitude ausbildet, die Kenngröße der Vibration (Auslenkung oder Auslenkungsgeschwindigkeit) an einer Doppelmessstelle aus zwei voneinander beabstandeten Einzelstellen und außerdem die Wellenlänge der laufenden Biegewelle ermittelt wird, und aus den ermittelten Werten die Abklingkonstante β von Amplitude bzw. Schwinggeschwindigkeit und damit der Verlustfaktor d der Probe bestimmt wird.

Im Unterschied zu dem bisher bekannten Verfahren erfolgt die Messung an einer laufenden Biegewelle mit abklingender Amplitude. Hierfür sollte die Biegewelle bis zum freien Probenende möglichst vollständig abgeklungen sein. Andernfalls entsteht eine reflektierte Welle und damit eine die Biegewelle überlagernde Stehwelle. Obwohl diese im Vergleich zur Biegewelle nur eine kleine Amplitude hat, stellen derartige Stehwellenerscheinungen ein fundamentales Problem für das gesamte Messverfahren dar, denn sie verfälschen die zu messenden Kenngrößen der laufenden, gedämpften Biegewelle. Durch weitere erfindungsgemäße Maßnahmen kann der Störeinfluss derartiger Stehwellen drastisch minimiert werden.

Es kommen daher z. B. deutlich längere Proben zum Einsatz als für das "Oberst"-Verfahren, wo ca. 25 cm Probenlänge üblich sind. Probenlängen von 1 bis 2 m haben sich besonders bewährt, da bei diesen aufgrund der Dämpfung durch die Probe die Biegewelle bis zum freien Ende der Probe praktisch abgeklungen ist, so dass keine reflektierte Biegewelle erzeugt wird. Die gemessenen Vibrationskenngrößen der Biegewelle sind daher ausschließliche bestimmt von den Dämpfungseigenschaften der Probe.

Dabei besteht jedoch häufig das Problem, dass es nicht möglich ist, 1 bis 2 Meter lange beschichtete Probenkörper zur Verfügung zu stellen.

Es hat sich aber überraschenderweise gezeigt, dass es vollkommen ausreicht, wenn das zu untersuchende, mit dem Entdröhnbelag beschichtete Trägerblech lediglich die obere Hälfte der Probe bildet. Den unteren Teil kann eine Dummy-Probe einnehmen, die aus einem ähnlichen Trägerblech besteht, das mit einem besonders wirksamen Entdröhnbelag beschichtet ist. Die Nahtstelle am Übergang zwischen den beiden Probenhälften bildet zwar eine potentielle Reflektionsstelle, es hat sich aber gezeigt, dass sie für die Messung kaum von Bedeutung ist. Die Biegewelle läuft recht ungestört über die Nahtstelle in die Dummy-Probe hinein. Sollte die Energie der Biegewelle auch am unteren Ende der Dummy-Probe noch nicht ganz absorbiert sein, entsteht ein Reflex, der zurückläuft und spätestens jetzt im Bereich der Dummy-Probe sehr weitgehend absorbiert wird. Auf diese Weise wird der obere Probenbereich mit dem zu vermessenden Entdröhnbelag von Stehwellen weitgehend freigehalten.

Beim Messverfahren werden vorzugsweise die Kenngrößen der Vibration an einer Doppelmessstelle aus zwei voneinander beabstandeten Einzelstellen ermittelt. Aus dem Abklingen der Amplitude bzw. der Schwinggeschwindigkeit lässt sich eine Abklingkonstante β relativ genau bestimmen, aus der unter Berücksichtigung der Biegewellenlänge der Verlustfaktor d ermittelt werden kann.

Die Messgenauigkeit kann weiter erhöht werden, wenn die Kenngrößen an mehreren Doppelmessstellen ermittelt werden. Da die Dämpfung über die gesamte Länge der Probe - einen einheitlichen Aufbau der Probe vorausgesetzt - identisch ist, sollte für jede Doppelmessstelle derselbe Wert für die Abklingkonstante bestimmt werden. Tatsächlich werden die Messwerte wegen Inhomogenitäten in der Probe streuen. Durch geeignete mathematische Verfahren lässt sich ein Mittelwert bestimmen, der frei ist von Einflüssen durch statistische Messfehler und lokale Probeninhomogenitäten.

Die Messgenauigkeit kann weiter erhöht werden, indem die obere Einspannung selbst als Schwingerreger ausgebildet ist. Solche mechanischen Generatoren werden auch als Shaker bezeichnet. Da die Einspannung selbst die Quelle der Erregung ist, können die Messungen beeinflussende Reflektionen an der Einspannstelle keine Bedeutung mehr haben.

Der Shaker muss natürlich an einem massiven Gerüst gehalten sein, so dass die Aufhängung selbst keinen Einfluss auf die Messung hat.

Zur Messung der Deformationskenngrößen haben sich Vibrometer bewährt.

Im Folgenden soll anhand eines Ausführungsbeispiels die Erfindung näher erläutert werden. Dazu zeigen
- Fig. 1: eine eingespannte Probe,
- Fig. 2: eine Prinzipdarstellung einer laufenden Biegewelle,
- Fig. 3: eine Messaufzeichnung,
- Fig. 4: eine Auswertung, sowie
- Fig. 5: eine weitere Messaufzeichnung (optimierte Variante) und
- Fig. 6: die dazugehörige Auswertung.

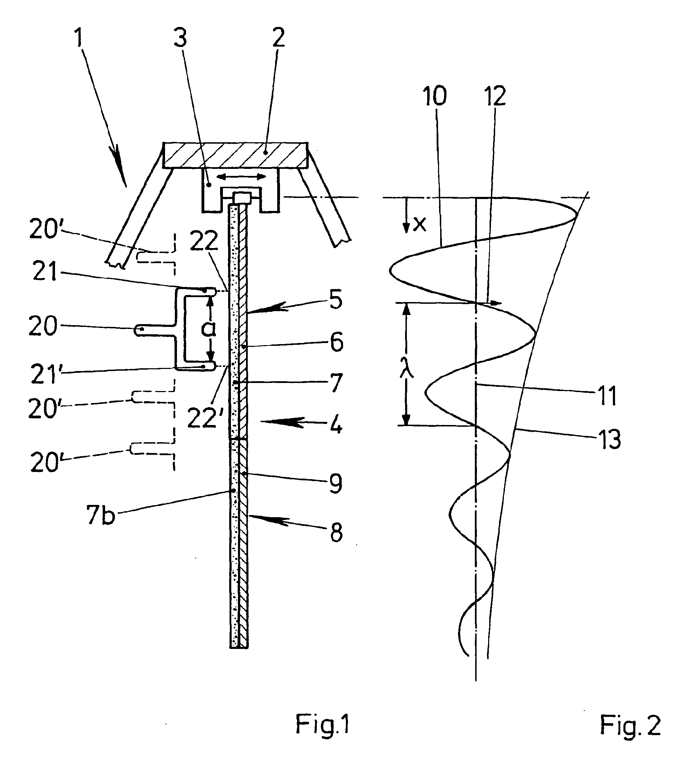

Figur 1 zeigt eine Messanordnung 1. Diese besteht aus einem massiven Trägerbalken 2, der Teil eines hier nicht näher dargestellten Gerüstes ist. An diesem Trägerbalken 2 befindet sich ein Shaker 3, in dem eine zweiteilige Probe 4 eingespannt ist. Diese besteht aus einem oberen Teil 5 mit einem Träger 6 aus Stahlblech, das 0,8 mm dick, 30 mm breit und 110 mm lang ist. Beschichtet ist dieser Teil 5 der Probe 4 mit einem Entdröhnbelag 7, dessen Dämpfungswirkung bestimmt werden soll. An den oberen Teil 5 schließt sich nach unten eine Dummy-Probe 8 an, die lediglich aus einem Träger 9 besteht, der im Aufbau und Größe dem Träger 6 des oberen Teiles 5 ähnelt und mit einem geeigneten, hoch wirksamen Entdröhnmaterial 7b beschichtet ist. Die gesamte Messanordnung befindet sich in einer Temperaturkammer, so dass die Messung für verschiedene Temperaturen durchgeführt werden kann.

Der Shaker 3 wird nun mit unterschiedlichen Frequenzen f und einer vorgegebenen Amplitude betrieben. Auf der Probe 4 entsteht eine nach unten laufende transversale Biegewelle 10 mit einer Wellenlänge λ, die in einer Momentaufnahme in Figur 2 dargestellt ist. Sie zeigt periodische Auslenkungen senkrecht zur 0-Lage 11 der Probe, wobei die Probe an den einzelnen Stellen die 0-Lage mit der Auslenkungsgeschwindigkeit, dargestellt durch den Vektor 12, durchläuft. Man erkennt, dass die Amplituden der Auslenkung zum Ende hin exponentiell abfallen, wobei der Abklingfaktor β der einhüllenden Exponentialfunktion 13 umso größer ist, je stärker die Probe 5 dämpfend wirkt. Entsprechendes gilt für die Auslenkungsgeschwindigkeiten.

Der Verlustfaktor d, also das auf einen Schwingungszyklus bezogene Verhältnis von in Wärme umgewandelter Energie zu maximal gespeicherter potentieller Energie, ist eine Funktion des Abklingfaktors β und der Biegewellenlänge λ. Der Abklingfaktor lässt sich bestimmen, indem z. B. die Amplitude der Biegewelle an zwei benachbarten Stellen gemessen wird. Dazu sind an einer Gabel 20 zwei Laservibrometer 21, 21' angebracht, mit denen die Auslenkung der Probe 5 gemessen werden kann. Der Maximalwert der Auslenkung ist die Amplitude an der Messstelle. An Stelle der Amplitude kann auch die Auslenkungsgeschwindigkeit ermittelt werden. Die Wellenlänge λ der laufenden Biegewelle erhält man z. B., indem ein Laserscanstandbild der schwingenden Probe 5 ausgewertet wird.

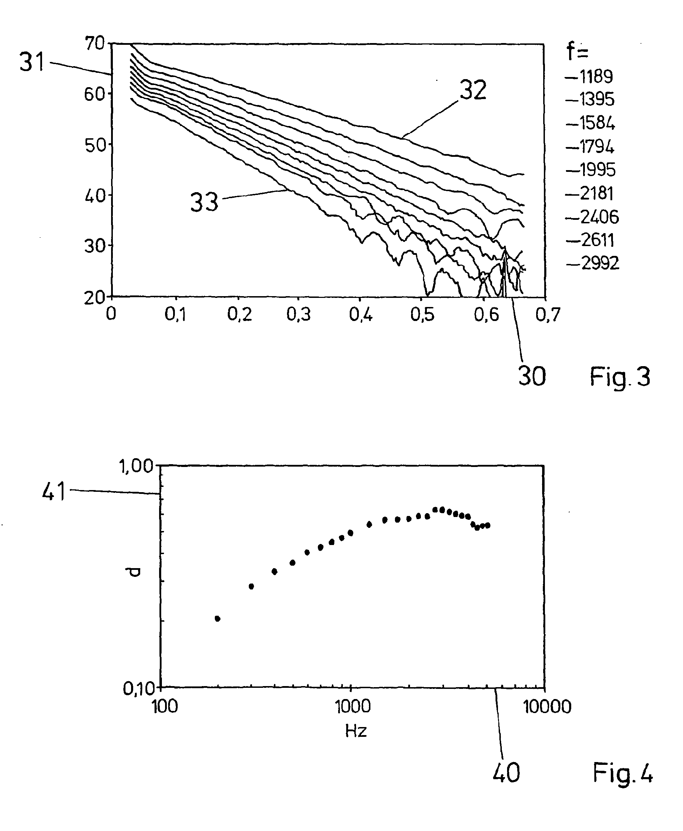

Figur 3 zeigt die Auslenkungsgeschwindigkeit für verschiedene Anregungsfrequenzen f in Abhängigkeit von der Entfernung zur Einspannung (X-Achse 30), wobei die Auslenkungsgeschwindigkeit (Y-Achse 31) logarithmisch in [dB] aufgetragen ist. Die obere Kurve 32 gehört zu einer geringen Frequenz von z. B. 1189 kHz, die untere Kurve 33 zu einer höheren Frequenz von ca. 2992 kHz. Aus den Steigungen der einzelnen Kurven lässt sich die Biegewellendämpfung pro Längeneinheit für die jeweilige Frequenz per Regression auswerten.

In Fig. 4 ist der Verlustfaktor d (Y-Achse 41) der Probe in Abhängigkeit von der Anregungsfrequenz f (X-Achse 40) dargestellt. Diese Messkurven erlauben eine sehr gute Aussage hinsichtlich der Dämpfungswirkung von mit Entdröhnmaterial beschichteten Blechen auf Schall oder Körperschall.

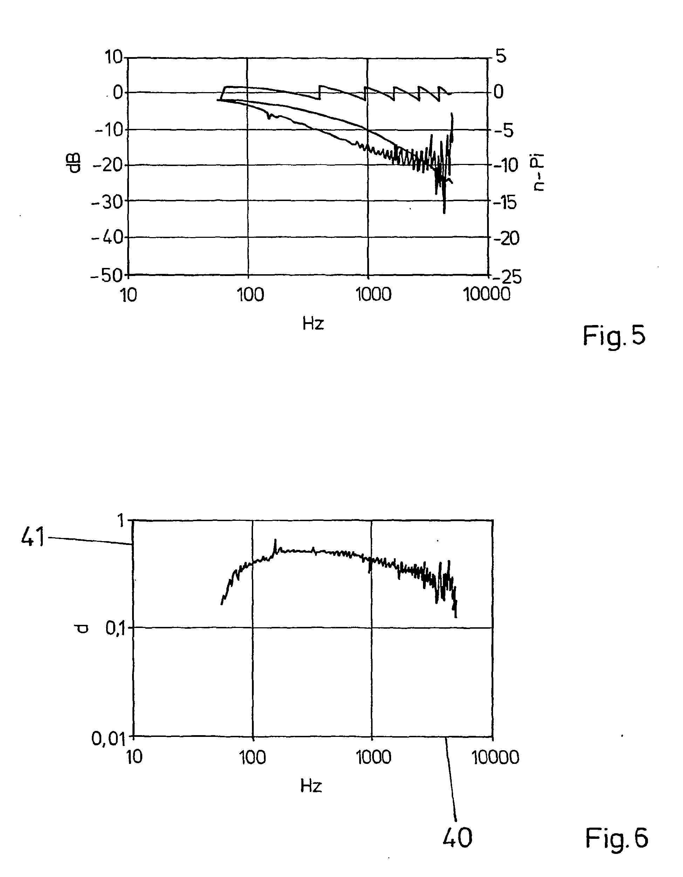

Eine hinsichtlich Präzision und Handhabbarkeit entscheidend optimierte Variante dieser Messmethode besteht darin, die Probe mit einem Breitbandsignal anzuregen, die Auslenkungsgeschwindigkeit an zwei verschiedenen, voneinander um die Strecke a beabstandeten Stellen 22, 22' gleichzeitig zu messen, per FFT die komplexe Übertragungsfunktion zu berechnen und aus Amplitudengang und Phasengang (Figur 5) den Verlustfaktor d zu bestimmen (Figur 6).

Führt man diese Messungen zudem an mehreren Doppelmessstellen durch, indem die Gabel 20 verschoben wird, was durch die strichpunktierte Linie 20' angedeutet sein soll, erhält man entsprechend mehrere komplexe Übertragungsfunktionen. Diese lassen sich durch ein geeignetes mathematisches Verfahren mitteln, wobei berücksichtigt ist, dass für jede Doppelmessung der Abstand a zwischen den beiden Messstellen gleich ist. Es hat sich überraschenderweise gezeigt, dass die gemittelte komplexe Übertragungsfunktion in weit größerem Ausmaß als erwartet von Störeinflüssen wie Stehwellenerscheinungen, Torsionen etc. befreit ist. Hiermit lassen sich dann rasch und rationell sehr präzise Werte für den Verlustfaktor d berechnen.

### Bezugszeichenliste

- 1: Messanordnung
- 2: Trägerbalken
- 3: Shaker
- 4: zweiteilige Probe
- 5: oberer Probenteil

- 6: Träger
- 7: Entdröhnbelag
- 8: Dummy-Probe
- 7b: Entdröhnbelag (Dummy-Probe)
- 9: Träger
- 10: transversale Biegewelle

- 11: 0-Lage
- 12: Vektor
- 13: Exponentialfunktion

- 20: Gabel
- 21, 21': Laservibrometer

- 30: X-Achse
- 31: Y-Achse
- 32: obere Kurve
- 33: untere Kurve

- 40: X-Achse
- 41: Y-Achse

## Patentansprüche

1. Verfahren zur Bestimmung der dynamischen Kenndaten von Materialien, insbesondere des Verlustfaktors von Belägen zur Körperschall-Entdröhnung in der KFZ-Industrie, mit den folgenden Schritten:
(1) Erzeugen einer streifenförmigen, das Material aufweisenden Probe;
(2) Einspannen der Probe an einem Ende und Erregen der Probe zu einer transversalen Biegewelle mittels eines Schwingerregers;
(3) Bestimmung einer Kenngröße der Auslenkung oder der Auslenkungsgeschwindigkeit an wenigstens einer Stelle der Probe;
**dadurch gekennzeichnet, dass**
(4) die Erregung am eingespannten Ende erfolgt, so dass eine zum anderen Ende der Probe laufende Biegewelle mit abnehmender Amplitude entsteht;
(5) die Kenngröße der Auslenkung oder der Auslenkungsgeschwindigkeit an einer Doppelmessstelle aus zwei voneinander beabstandeten Einzelstellen ermittelt wird;
(6) die Wellenlänge der laufenden Biegewelle ermittelt wird; und
(7) aus den ermittelten Werten der Verlustfaktor der Probe ermittelt wird.

2. Verfahren nach Anspruch 1, **dadurch gekennzeichnet, dass** die Probe hängend an einem Einspannkopf eingespannt ist und dieser als Schwingerreger dient.

3. Verfahren nach Anspruch 1 oder 2, **dadurch gekennzeichnet, dass** der Probenkörper aus einem mit dem zu vermessenden Material beschichteten Träger besteht und dass an seinem freien Ende eine streifenförmige Dummy-Probe als Biegewellen-Absorber befestigt ist.

4. Verfahren nach Anspruch 1 oder 2, **dadurch gekennzeichnet, dass** die Bestimmung der Kenngrößen der Auslenkung oder der Auslenkungsgeschwindigkeit an mehreren gegeneinander versetzten Doppelmessstellen erfolgt, wobei die Dämpfungseigenschaft der Probe als Mittelwert der für jede Doppelmessstelle ermittelten Dämpfungseigenschaften errechnet wird.

5. Verfahren nach Anspruch 1, 2 oder 3, **dadurch gekennzeichnet, dass** die Probe mit einem breitbandigen Signal angeregt wird, die Bestimmung der Kenngrößen der Auslenkung oder der Auslenkungsgeschwindigkeit an einer Doppelmessstelle erfolgt, wobei hierfür die komplexe Übertragungsfunktion berechnet wird und daraus Amplitudengang und Phasengang und hiermit schließlich der Verlustfaktor bestimmt wird.

6. Verfahren nach einem der vorhergehenden Ansprüche, **dadurch gekennzeichnet, dass** die Messung der Auslenkungskenngrößen mit Hilfe eines Laservibrometers erfolgt.

## Claims

1. A method for determining the dynamic characteristics of materials, in particular the loss factor of coatings for structure-borne noise deadening in the automobile industry, with the following steps:
(1) production of a strip-shaped sample having the material;
(2) clamping of the sample at one end and excitation of the sample to a transverse bending wave by means of a vibration exciter;
(3) determining a characteristic of the deflection or of the deflection speed at at least one location of the sample;
**characterized in that**
(4) the excitation takes place at the clamped end, so that a bending wave running to the other end of the sample occurs with decreasing amplitude;
(5) the characteristic of the deflection or of the deflection speed is determined at a double measuring point of two individual points spaced apart from each other;
(6) the wave length of the running bending wave is determined; and
(7) the loss factor of the sample is determined from the determined values.

2. The method according to Claim 1, **characterized in that** the sample is clamped, suspended on a clamping head and the latter serves as vibration exciter.

3. The method according to Claim 1 or 2, **characterized in that** the sample body consists of a carrier coated with the material which is to be measured and that a strip-shaped dummy sample is fastened as bending wave absorber at its free end.

4. The method according to Claim 1 or 2, **characterized in that** the determining of the characteristics of the deflection or of the deflection speed takes place at several double measuring points which are staggered with respect to each other, wherein the damping characteristic of the sample is calculated as mean value of the damping characteristics determined for each double measuring point.

5. The method according to Claim 1, 2 or 3,
**characterized in that** the sample is excited with a wide band signal, the determining of the characteristics of the deflection or of the deflection speed takes place at a double measuring point, wherein for this the complex transmission function is calculated and therefrom the amplitude-frequency characteristic and phase-frequency characteristic and herewith finally the loss factor is determined.

6. The method according to one of the preceding claims, **characterized in that** the measurement of the deflection characteristics takes place with the aid of a laser vibrometer.

## Revendications

1. Procédé permettant de déterminer les données caractéristiques dynamiques de matériaux, en particulier le facteur de perte de revêtements pour l'étouffement du bruit de structure dans l'industrie automobile, comprenant les étapes suivantes :
(1) Production d'un échantillon sous forme de bande présentant le matériau ;
(2) Fixation de l'échantillon par une extrémité et l'excitation de l'échantillon pour obtenir une onde de flexion transversale au moyen d'un excitateur de vibrations ;
(3) Détermination d'une grandeur caractéristique de la déviation ou de la vitesse de déviation sur au moins un emplacement de l'échantillon ;
**caractérisé en ce que**
(4) l'excitation s'effectue sur l'extrémité fixée, de sorte qu'une onde de flexion allant à l'autre extrémité de l'échantillon se forme avec une amplitude décroissante ;
(5) la grandeur caractéristique de la déviation ou de la vitesse de déviation est déterminée sur un point de double mesure à partir de deux emplacements individuels espacés l'un de l'autre ;
(6) la longueur d'onde de l'onde de flexion permanente est déterminée ; et
(7) le facteur de perte de l'échantillon est déterminé à partir des valeurs déterminées.

2. Procédé selon la revendication 1, **caractérisé en ce que** l'échantillon est fixé de façon suspendue sur une tête de serrage et cette tête sert d'excitateur de vibration.

3. Procédé selon la revendication 1 ou 2, **caractérisé en ce que** l'éprouvette est à base d'un support revêtu avec le matériau à mesurer et **en ce qu'**un échantillon factice en tant qu'absorbeur d'onde de flexion est fixé sur son extrémité libre.

4. Procédé selon la revendication 1 ou 2, **caractérisé en ce que** la détermination des grandeurs caractéristiques de la déviation ou de la vitesse de déviation s'effectue sur plusieurs points de double mesure décalés les uns par rapport aux autres, la propriété de l'amortissement de l'échantillon étant calculée comme valeur moyenne des propriétés d'amortissement déterminées pour chaque point de double mesure.

5. Procédé selon la revendication 1, 2 ou 3, **caractérisé en ce que** l'échantillon est excité avec un signal à large bande, la détermination des grandeurs caractéristiques de la déviation ou de la vitesse de déviation s'effectue sur un point de double mesure, la fonction de transmission complexe étant calculée à cet effet et la réponse d'amplitude et la courbe de réponse en phase et de ce fait enfin le facteur de perte étant déterminés à partir de là.

6. Procédé selon l'une quelconque des revendications précédentes, **caractérisé en ce que** la mesure des grandeurs caractéristiques de déviation s'effectue à l'aide d'un vibromètre à laser.
